# EUROPÄISCHE PATENTSCHRIFT

(11) **EP 0 927 315 B1**
(45) Veröffentlichungstag und Bekanntmachung des Hinweises auf die Patenterteilung: **17.09.2003**
(21) Anmeldenummer: 98943776.9
(22) Anmeldetag: 24.07.1998
(51) Int. Cl.: F16F 13/14

(54) **RADIAL-GUMMILAGER**
RUBBER RADIAL BEARING
PALIER RADIAL EN CAOUTCHOUC

(30) Priorität: 25.07.1997 DE 19732123
(43) Veröffentlichungstag der Anmeldung: 07.07.1999
(73) Patentinhaber: WOCO Franz-Josef Wolf & Co., 63628 Bad Soden-Salmünster (DE)
(72) Erfinder: WOLF, Franz, Josef, D-63628 Bad Soden-Salmünster (DE); KOCZAR, Peter, D-63607 Wächtersbach (DE); FIEDLER, Christian, D-63636 Brachttal (DE)
(74) Vertreter: Weber-Bruls, Dorothée, Dr.
(86) Internationale Anmeldenummer: EP9804643
(87) Internationale Veröffentlichungsnummer: WO99005429

(56) Entgegenhaltungen:
- EP-A- 0 326 472
- EP-A- 0 415 001
- EP-A- 0 418 671
- EP-A- 0 645 556
- DE-A- 3 920 153
- DE-A- 19 503 445
- US-A- 5 054 752
- US-A- 5 286 011

## Beschreibung

Die Erfindung betrifft ein hydraulisch dämpfendes hülsenförmiges Gummilager der im Oberbegriff des Patentanspruchs 1 genannten Art, siehe EP-A-415 001.

Ein solches Hülsenlager ist auch aus der europäischen Offenlegungsschrift EP 0 335 007 A2 bekannt. Es weist einen Drosselkanal mit kleinem Querschnitt zum Dämpfen von Schwingungen mit kleineren Amplituden, speziell in der Grössenordnung von ±0,1 mm im akustischen Frequenzbereich von ungefähr 40 bis 200 Hz, und einen als Bypasskanal zu diesem Drosselkanal wirkenden zweiten Überströmkanal mit größerem Querschnitt auf, in dem eine Gummilippe als Bypassventil vorgesehen ist. Bei einem Einwirken von übergrossen Amplituden (>±2mm) auf das Lager, also bei einem Auftreten eines über die bestimmungsgemäss für die jeweilige Anwendung des Lagers absehbaren Betriebskenndaten hinaus erhöhten Druckgradienten in einer der beiden Fluidkammern, öffnet die Gummilippe und läßt Dämpfungsfluid unter Druckgradientenausgleich, gegebenenfalls unter geringer Bedämpfung, von jeweils einer zur anderen Kammer überströmen.

Bei den genannten Vorgängen, die mit übergroßen Amplituden auf das Lager einwirken, handelt es sich, insbesondere im Bereich der Kraftfahrzeugtechnik, in aller Regel entweder um stochastische Stöße und Schläge oder um niederfrequente schwingungsähnliche Vorgänge mit großer Amplitude, wie sie beispielsweise im Kraftfahrzeug beim Fahren über langwellige Fahrbahnen auftreten und in der Regel bei Frequenzen unterhalb von 10 Hz, also bei Frequenzen weit im subakustischen Bereich, liegen.

Um die bei diesen dynamischen Federbelastungen auftretenden und zum Teil recht erheblichen Kräfte sowohl funktionskonform als auch für die Gummifeder möglichst materialschonend aufnehmen zu können, sind Lager dieser Art üblicherweise so abgestimmt, daß ihre Grundresonanz in den Bereich zwischen 10 und 30 Hz gelegt wird, also in den Bereich zwischen den deutlich subakustischen Frequenzen und den tiefsten akustischen Frequenzen. Dafür muß jedoch bei Lagern dieser Art in Kauf genommen werden, daß die dynamische Federrate des Lagers nach dem Resonanzmaximum zu höheren Frequenzen hin kaum noch nennenswert abnimmt. Je größer jedoch die nach dem Resonanzmaximum verbleibende dynamische Federrate des Lagers ist, desto durchlässiger wird das Lager für einen Durchgang der anschließenden Frequenzen im akustischen Bereich, so daß also akustische Störschwingungen als nur unzureichend gedämpfter oder sogar nahezu ungedämpfter Körperschall vom Auflageranschluß zum Widerlageranschluß, d.h. von der Innenhülse zur Außenhülse oder umgekehrt von der Außenhülse zur Innenhülse des Hülsengummilagers durchlaufen. Bei der Verwendung solcher Hülsenfedern im Kraftfahrzeugbau führt dies zu einer unüberhörbaren Beeinträchtigung des akustischen Komforts im Kraftfahrzeug.

Aus der EP 0 415 001 ist ein hydraulisch dämpfendes hülsenförmiges Gummilager mit einem Anschlußblock und einem diesen umgebenden Gummifederblock, einem mit Flüssigkeit gefüllten Arbeitsraum sowie einem mit Flüssigkeit gefüllten Ausgleichsraums bekannt. Die beiden Räume sind miteinander über ein Druckbegrenzungsventil fluidal verbunden, das ein mit dem Gummifederblock einstückig ausgebildetes Stellglied aufweist. Das Stellglied ist im unbetätigten Zustand in einem Abstand von einem Gegenanschlag angeordnet, der durch eine Außenhülse des Gummilagers gebildet wird. Das Stellglied ist derart abgestimmt, daß eine gegenseitige Berührung zwischen dem Stellglied und dem Gegenanschlag bei der Einleitung akustisch wirksamer Schwingungen mit kleinen Amplituden und einer Frequenz von mehr als 30 Hz ausgeschlossen ist. Bei tieffrequenten Schwingungen und hohem Druck wird das Stellglied flüssigkeitsdicht an den jeweils zugehörigen Gegenanschlag angepreßt.

Ausgehend von diesem Stand der Technik liegt der Erfindung das technische Problem zugrunde, ein hydraulisch dämpfendes hülsenförmiges Gummilager der vorstehend erläuterten Art dahingehend zu verbessern, daß die Hülsenfeder nach einem sub-akustischen Dämpfungsbereich, also einem Frequenzbereich unterhalb ungefähr 10 Hz und einem Resonanzmaximum im Bereich von 10 bis 30 Hz, im anschließenden tiefen akustischen Frequenzbereich bis zumindest in einen Bereich von ungefähr 200 Hz hinauf eine gegenüber dem Stand der Technik deutlich abgesenkte dynamische Lagerfederrate zur Unterdrückung der Körperschallübertragung in diesem unteren akustischen Bereich aufweist.

Die Erfindung löst diese Aufgabe durch die Merkmale des Anspruchs 1.

Die Entkopplung erfolgt dabei in einer an sich für grossvolumige Traglager bekannten Weise über eine Lose, die einen Schalldruckausgleich zwischen den Fluidkammern eines solchen Traglagers ermöglicht, ohne daß es in dem Drosselkanal zwischen Arbeitskammer und Ausgleichskammer zu relevanten Volumenverschiebungen des Dämpfungsfluids kommt. Die Lose ist dabei in einem separaten Nebenkanal zum Drosselkanal angeordnet.

Bei dem hier gegenständlichen Hülsenlager ist die als Entkopplungsglied dienende flatterfähige Lose in einem der beiden Überströmkanäle des Hülsenlagers angeordnet, also entweder im Dämpfungskanal oder, vorzugsweise, im Bypasskanal. Unter "Lose" wird dabei im üblichen Sinne ein Einlegeteil verstanden, das lose, also ohne schlüssigen Verbund, allseits begrenzt, in diesem Rahmen aber frei beweglich, flatterfähig, in einer Aufnahme oder einem Käfig eingelegt oder aufgenommen ist.

Bei Ausbildung der Losefesselung als Käfig sind die Wanddurchbrechungen eines solchen Entkopplungskäfigs so groß zu bemessen, daß sie einen drosselfreien Durchtritt der in dem Dämpfungsfluid des Hülsenlagers zu entkoppelnden Körperschallwellen mit den kleinen Amplituden ermöglichen.

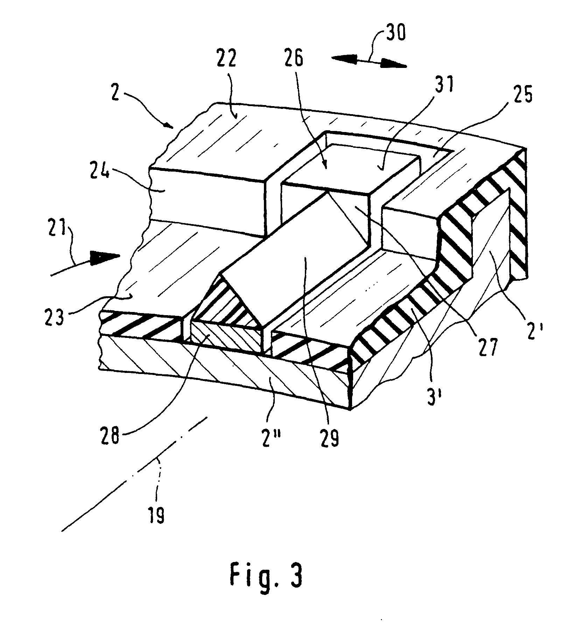

Da der Einsatz von Käfigen zur Losefesselung bei Stossbelastung des Lagers unter Umständen jedoch nicht ganz problemlos sein kann, ist die im Hülsenlager der Erfindung eingesetzte Lose vorzugsweise in Hinterschnittkonstruktionen flatterfähig gelagert (Fig. 3).

Der Werkstoff der Lose selbst kann prinzipiell unter Werkstoffen mit geringerer Dichte beliebig ausgewählt werden, beispielsweise also auch ein Kunststoffteil oder ein Aluminiumblech sein, ist für den vorliegenden Zweck aber vorzugsweise ein Elastomerteil, insbesondere ein Elastomersteg oder eine Elastomermembran, um das Entstehen von Klappergeräuschen oder Flattergeräuschen der Lose, insbesondere in einem Käfig, auszuschalten.

Nach einer bevorzugten Ausgestaltung der Erfindung ist das Entkopplungsglied achsparallel zur Längsachse der Hülsenfeder ausgerichtet und erstreckt sich vorzugsweise über die axiale Breite des Gummifederkörpers zwischen zwei stirnseitigen Dichtmitteln, vorzugsweise zwei zylindrischen Flächen-Dichtringen des Hülsenkäfigs der Gummifeder. Diese Bauweise ermöglicht bei einer nur geringen Bauhöhe des Entkopplungsgliedes in Radialrichtung der Hülsenfeder dennoch die Schaffung einer zur akustischen Entkopplung ausreichend grossen Wirkfläche.

Bei Verwendung einer zylindrischen Flächendichtung an den beiden Stirnseiten der Hülsenfeder ist der Drosselkanal vorzugsweise in den radial aussenliegenden Mantelflächen der Zylinderringe ausgebildet. Die beiden so ausgebildeten Teildrosselkanäle sind, wiederum bezogen auf das Hülsenlager, durch einen axial die beiden stirnseitigen Ringkanäle miteinander verbindenden Kanalabschnitt kommunizierend verbunden. Bei einer Anordnung des Entkopplungsgliedes im Drosselkanal ist dieses dann vorzugsweise in diesem axial verlaufenden Verbindungsabschnitt angeordnet.

Statt eines Entkopplungskäfigs mit eingelegter Lose, speziell einer Elastomermembran als Lose, können auch andere an sich bekannte Mittel zur akustischen Entkopplung eingesetzt werden, vor allem eine leicht verformbare Gummimembran oder Gummilippe, die entweder einstückig mit dem Gummifederblock ausgebildet oder in anderer Weise im Bypasskanal oder im Drosselkanal angebunden oder beweglich festgelegt sein kann.

Bei einem hydraulisch dämpfenden hülsenförmigen Gummilager erfolgt die Entkopplung der akustischen Schwingungen mit kleinen Amplituden vorzugsweise an oder im Bypasskanal, wobei eine solche Entkopplung funktionell dann jedoch nicht seriell, sondern parallel zum Bypasskanalventil angeordnet sein muß, um den in diesem Bypasskanal bestimmungsgemäß bei einwirkenden Stößen auftretenden Dämpfungsfluidstrom nicht zu beeinträchtigen. Beide Funktionalitäten, die Durchlässigkeit für Druckstösse im Dämpfungsfluid und die Entkopplung der akustischen Schwingungen mit kleinen Amplituden, müssen so realisiert sein, dass sie im Hülsenlager funktionell unabhängig voneinander und ohne gegenseitige Beeinträchtigung zur Verfügung stehen. Eine solche funktionelle Parallelität des Bypassventils und des Entkopplungsgliedes schliesst jedoch nicht aus, dass beide Funktionen auch in einem und demselben Bauteil realisiert sein können, da sie bei jeweils deutlich unterschiedlichen Grenzwerten der im Dämpfungsfluid auftretenden Druckschwankungen ansprechen müssen.

Da Hülsen-Gummilager der Erfindung wird vorzugsweise als Radiallager eingesetzt. Es ist jedoch gleichermassen für einen Einsatz als Axiallager wirkungsvoll verwendbar, und zwar insbesondere dann, wenn ein solches Axiallager bei bestimmungsgemässem Einsatz auch grösseren Radialkräften ausgesetzt ist.

Die Erfindung ist im folgenden anhand von Ausführungsbeispielen in Verbindung mit den Zeichnungen näher erläutert. Es zeigen:
- Fig. 1: im Radialschnitt ein Ausführungsbeispiel eines hydraulisch dämpfenden hülsenförmigen Radialgummilagers mit einem als Käfig und Lose ausgebildeten Entkopplungsglied;
- Fig. 2: Lagerfederkennlinien für das in Fig. 1 gezeigte Ausführungsbeispiel und für ein Vergleichslager nach dem Stand der Technik; sowie
- Fig. 3: in perspektivischer Teildarstellung ein kombiniertes Bypassventil/Entkopplungsglied in einem Bypasskanal einer Hülsenfeder.

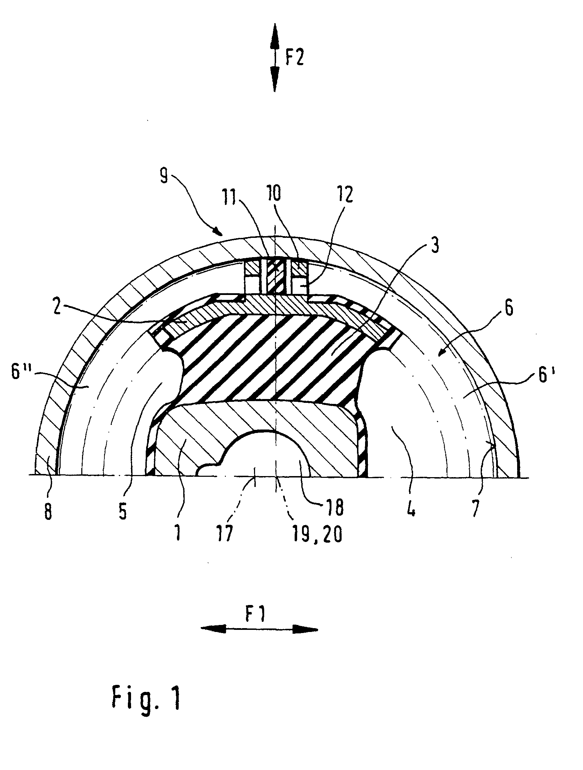

In der Fig. 1 ist im Radialschnitt eine hydraulisch dämpfende Gummi-Hülsenfeder mit einem Entkopplungselement zur Entkopplung niederfrequenter akustischer Schwingungen dargestellt.

Ein innenliegender hülsenartiger oder nabenartiger Anschlußblock 1 ist achsparallel von einem hülsenartigen Käfig 2 umgeben. Der innere Anschlußblock 1 und der hülsenartige Käfig 2 sind in einen Gummifederblock 3 einvulkanisiert. In dem Gummifederblock 3 sind zwei Arbeitsfluidkammern 4,5 ausgebildet, die über die beiden Äste 6',6" eines Drosselkanals 6 miteinander kommunizieren. Die Arbeitskammern 4,5 und der Drosselkanal 6 sind nach radial außen durch die zylindrische Innenwand 7 einer Außenhülse 8 aus Stahl fluiddicht abgeschlossen. Dazu ist der durch den Hülsenkäfig 2 verstärkte Gummifederblock 3 unter radialer Vorspannung in die Außenhülse 8 eingepreßt. Dem Drosselkanal 6 radial gegenüberliegend (im unteren, nicht ausgeführten Abschnitt der Fig. 1) ist ein Bypasskanal mit größerem Querschnitt ausgebildet, der hier nicht dargestellt ist.

In der durch den Doppelpfeil F1 dargestellten radialen Arbeitsrichtung weist die Hülsenfeder eine weichere Federkennlinie auf als in der in der Radialebene senkrecht dazu ausgerichteten Querrichtung, die durch den Doppelpfeil F2 gekennzeichnet ist.

Im Verlauf des Drosselkanals 6, der die Kammern 4,5 miteinander verbindet, ist ein Entkopplungsglied 9 eingeschaltet, das aus einem Entkopplungskäfig 10 und einer eingelegten Lose 11, in Form einer Elastomermembran, besteht. Dabei erstrecken sich die beiden einander gegenüberliegenden Wände 10 des Entkopplungsgliedes 9 achsparallel zur Lagerlängsachse über die gesamte axiale Länge der Arbeitskammern 4, 5 und der axial seitlich von den Kammern ausgebildeten Kanäle. In jeder der Käfigwände ist eine Folge dicht beieinander liegender Bohrungen 12 ausgebildet. Zwischen den beiden käfigbildenden Entkopplungskammerwänden 10 ist ein selbsttragender Elastomerstreifen 11 eingelegt, der mit allen Seitenflächen an den umgebenden Wandflächen der Entkopplungskammer höchstens lose anliegt. Die Dicke des Elastomerstreifens ist in der aus der Fig.1 ersichtlichen Weise deutlich kleiner als der lichte Abstand zwischen den beiden Innenwandflächen der Entkopplungskammerwände 10.

Wenn Schwingungen mit kleinen Amplituden, d.h. Schwingungen mit Amplituden im Bereich <±0,1 mm, in den Anschlußblock 1 eingeleitet werden, so gelangen diese als Körperschallschwingungen über den Anschlußblock 1 in das Druckfluid der Arbeitskammern 4,5 und laufen als Druckwellen durch das Arbeitsfluid aus den Arbeitskammern 4,5 durch in der Fig. 1 nicht dargestellte Anschlußfenster hindurch in die Drosselteilkanäle 6',6" hinein und durch diese hindurch sowie durch die Bohrungen 12 hindurch auf die Elastomer-Lose 11 im Entkopplungsglied 9. Durch eine unter Last weitgehend symmetrische Ausbildung der Arbeitskammern 4,5 und der Druckwellenpfade durch die nicht dargestellten Fenster und über die Drosselkanal-Teilabschnitte 6' und 6" treffen die Schalldruckwellen ihrer Entstehung entsprechend komplementär auf die Elastomer-Lose im Entkopplungsglied, wo sie praktisch reflexionslos gelöscht werden, ohne daß es im Drosselkanal 6 zu Dämpfungsprozessen oder Strömungsprozessen kommt. Ein Bypasskanal bleibt von diesem Geschehen unberührt.

In diesem Zusammenhang ist darauf hinzuweisen, daß das Hülsen-Radialgummilager in der Fig. 1 im nicht eingebauten, unbelasteten Zustand dargestellt ist, in dem die Längsachse 17 der Bohrung 18 im innenliegenden Anschlußblock 1 nicht koaxial, sondern lediglich achsparallel zur Lagerachse 19 und zur Längsachse 20 der Hülse (2) verläuft. Dabei ist der Gummifederkörper 3 in dem in Fig. 1 gezeigten Zustand vor einem bestimmungsgemässen Einbau des Lagers so konfiguriert und vorgespannt, daß bei Einwirken der vorgegebenen statischen Solllast auf den Anschlußblock, in der Darstellung der Fig. 1 in Richtung des Doppelpfeils F1 von links nach rechts, die Gummifeder 3 so weit verformt ist, daß dann im Nullpunkt einer aufgeprägten dynamischen Last alle drei genannten Achsen (17, 19, 20) tatsächlich koaxial zusammenfallen.

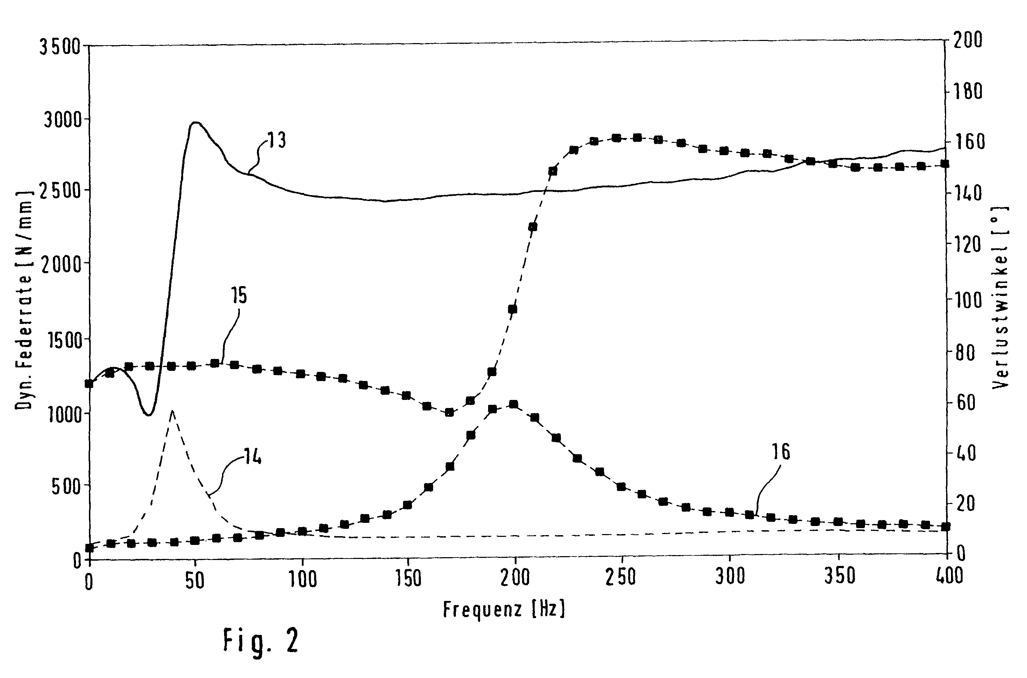

Den in Fig. 2 gezeigten Hülsenfeder-Lagerkennlinien ist die Wirkung des in der Fig. 1 gezeigten Entkoppelgliedes 9 entnehmbar.

Die Kurve 13 zeigt den Verlauf der dynamischen Federrate als Funktion der Frequenz einer dem Anschlußstück aufgeprägten Schwingung für eine Hülsenfeder nach dem Stand der Technik ohne Entkopplungsglied. Deutlich sind die im Bereich um 40 Hz liegende Resonanz des Drosselkanals sowie die oberhalb von ungefähr 40 bis 50 Hz verbleibende hohe dynamische Steifigkeit der Hülsenfeder nach dem Stand der Technik erkennbar.

In der Fig. 2 zeigt die Kurve 14 den zugehörigen Verlustwinkel, ebenfalls als Funktion der Beaufschlagungsfrequenz.

Die mit den Meßpunkten versehene Kurve 15 der Fig. 2 zeigt den Verlauf der dynamischen Federrate derselben Hülsenfeder nach einem Einbau des in Fig. 1 dargestellten Entkopplungsgliedes 9. Erst bei einer Frequenz von über 200 Hz erreicht das Hülsenlager gemäß der Erfindung die dynamische Federrate, die für das Lager nach dem Stand der Technik bereits ab 50 Hz auftritt. Während also bei Lagern nach dem Stand der Technik der gesamte akustische Störschwingungsbereich ab oberhalb ungefähr 40 bis 50 Hz das Lager von dem inneren Anschlußblock bis zur äußeren Anschlußhülse als Körperschall durchläuft, kann im Lager der Erfindung vor allem der im Kraftfahrzeugbau problematische akustische Störbereich im Frequenzbereich bis zu 200 Hz entkoppelt werden.

Der zur Kurve 15 im Diagramm der Fig. 2 gehörende Frequenzverlauf des Verlustwinkels für das Hülsenlager gemäß der Erfindung ist in der Kurve 16 wiedergegeben.

In der Fig. 3 ist in perspektivischer Teilansicht, teils im Radialschnitt, ein zweites Ausführungsbeispiel der Erfindung gezeigt.

In der Fig. 3 ist, radial angeschnitten, ein Abschnitt eines Bypasskanals (21) gezeigt, der eine Durchlässigkeit des Hülsenlagers für Druckstösse gewährleistet, die im Dämpfungsfluid auftreten können.

Der aus Stahl bestehende Innenkäfig 2 weist stirnseitig zwei zylindrische Ringabschnitte 2' auf, die über axial verlaufende Stege 2" unter Bildung des Käfigs 2 für die Gummifeder 3 miteinander verbunden sind. Die gesamte Oberfläche des Käfigs 2 ist, wie hier auch in Fig. 3 dargestellt, insgesamt mit einer gut absorbierenden und dämpfenden Gummierungsschicht 3' versehen, die als integraler Bestandteil der Gummifeder 3 zusammen mit dieser hergestellt wird. Im übrigen ist das in Fig. 3 im Ausschnitt dargestellte Hülsenlager prinzipiell ebenso aufgebaut wie das in Fig. 1 gezeigte Ausführungsbeispiel, so daß Einzelheiten in der Fig. 3 nicht dargestellt sind.

Durch Überschieben der äusseren Stahlhülse 8 (Fig. 1) werden die Kanäle und Ausnehmungen des Hülsenkörpers fluiddicht verschlossen. Dabei ist der die Druckstösse im Dämpfungsfluid abbauende Bypasskanal 21 nach aussen hin über die zylindrische Oberfläche 22 verschlossen, die in der ebenfalls aus Fig. 1 ersichtlichen Weise eine zylindrische Flächendichtung gegen die Innenwand 7 der Aussenhülse 8 (Fig. 1) bildet.

in der zylindrischen Bodenfläche 23 sowie in der kreisringförmigen Seitenwand 24 und in der zylindrischen Dichtfläche 22 der gummierten Lagerfederhülse 2 sind Ausnehmungen 25 zur Aufnahme eines Einlegeteils 26 vorgesehen. Das Einlegeteil 26 besteht aus Metall oder Kunststoff und weist an seinen axial einander gegenüberliegenden Enden würfelförmige oder quaderförmige Konfiguration auf. Diese beiden axial einander gegenüberliegenden Endquader 27 sind durch eine flache Trägerschiene 28 miteinander verbunden.

Auf der Trägerschiene 28 des Einlegeteils 26 ist fest mit dieser verbunden eine stegförmige, sich nach radial aussen verjüngende Dichtlippe 29 angeordnet. In ihrer, bezogen auf das Hülsenlager, radialen Höhe ist diese Dichtlippe 29 so bemessen, dass sie im zusammengebauten Lager die Innenwand 7 der Aussenhülse 8 eben gerade nicht berührt. Die radial aussenliegende Oberkante der Dichtlippe 29 lässt zur Innenwandoberfläche 7 der Aussenhülse 8 einen freien Spalt von ≈0,1 mm mit einer Toleranz von -0,1 mm.

Die Ausnehmung 25 ist insgesamt so bemessen, dass das gesamte in die Ausnehmung 25 eingelegte Einlegeteil 26 rundum, insbesondere jedoch in tangentialer Richtung,eine zwar begrenzte, aber doch ausreichend grosse Beweglichkeit aufweist, dass es in der oben beschriebenen Weise als Lose zur akustischen Schwingungsentkopplung wirken kann. Diese Lose ist dabei hinsichtlich der Werkstoffwahl so leicht und mit einer so geringen Reibung beweglich gehalten, dass es beim Auftreffen akustischer Druckwellen auf seine quer im Bypasskanal einander gegenüberliegenden Oberflächen in der durch den Doppelpfeil 30 in Fig. 3 angedeuteten Weise akustisch entkoppelnd flattern kann.

Gleichzeitig sind die beiden einander axial am Käfigsteg 28 gegenüberliegenden nach radial auswärts weisenden Oberflächen 31 der quaderförmigen Endteile 27 des Einlegteils 26 in ihrer radialen Höhenposition mit einem solchen Untermass zur Innenfläche 7 der Aussenhülse 8 (Fig. 1) bemessen, dass sie bei vergleichsweise grossen auf den Steg 29 einwirkenden Druckstössen in dem Dämpfungsfluid des Lagers ausreichend weit verkippbar sind, um als Bypassventilkörper wirken und öffnen zu können, also durchlässig für Stosswellen und grosse Amplituden zu sein.

Das quer im Bypasskanal 21 angeordnete Einlegeteil 26 realisiert also sowohl die Funktion einer Lose zum Entkoppeln akustischer Schwingungen als auch die Funkrion eines Ventilkörpers für die Durchlässigkeit des Hülsenlagers für grosse Amplituden und Stossfronten.

Aufgrund ihrer Kenndaten in Verbindung mit ihrer geringen Baugröße werden die hülsenförmigen Radialgummilager gemäß der Erfindung vorzugsweise im Kraftfahrzeugbau als Fahrwerksbuchse, insbesondere zur Reduzierung von Achsquerschwingungen an den Querstreben der Fahrzeugvorderachsen, verwendet.

## Patentansprüche

1. Hydraulisch dämpfendes hülsenförmiges Gummilager mit radial senkrecht zueinander (F1, F2) unterschiedlichen Federkennlinien, bestehend aus einem innenliegenden hülsenartigen Anschlußblock (1) und einem diesen umschließenden, ebenfalls hülsenartigen Käfig (2), die achsparallel ineinanderliegend in einem Gummifederblock (3) eingebettet sind, in dem wiederum mindestens zwei diametral einander gegenüberliegende und über einen oder mehrere dämpfende Drosselkanäle (6) und mindestens einen Bypasskanal (21) miteinander kommunizierende Arbeitskammern (4, 5) für das Dämpfungsfluid so ausgebildet sind, daß diese nach radial außen von der zylindrischen Innenwand (7) einer Außenhülse (8) des Hülsenlagers fluiddicht abgeschlossen sind, in die der durch den Käfig (2) verstärkte Gummifederblock (3) eingepreßt ist, wobei der mindestens eine dämpfende Drosselkanal (6) und der Bypasskanal (21) jeweils auf verschiedene Frequenz- und Amplitudenbereiche abgestimmte voneinander verschiedene dynamische Kenndaten aurweisen, **gekennzeichnet durch** ein auf kleine Amplituden im akustischen Frequenzbereich abgestimmtes Entkopplungsglied (9; 26) im Drosselkanal (6) oder im Bypasskanal (21) des Hülsenlagers, das die im Dämpfungsfluid auftretenden Schwingungen mit kleinen Amplituden im akustischen Frequenzbereich zwischen den kommunizierenden Kammern (4, 5) löscht, ohne daß in dem so entkoppelnden Kanal (6; 21) dämpfende Volumenströme oder Sperren gegen durchlaufende Druckwellenfronten mit großen Amplituden auftreten.

2. Gummilager nach Anspruch 1, **gekennzeichnet durch** ein achsparallel zur Hülsenlagerachse (19) ausgerichtetes Entkopplungsglied (9; 26).

3. Gummilager nach einem der Ansprüche 1 oder 2, **gekennzeichnet durch** ein im Drosselkanal (6) querliegendes Entkopplungsglied (9) in Form eines Entkopplungskäfigs (10), in den eine Elastomermembran (11) als Lose eingelegt ist.

4. Gummilager nach einem der Ansprüche 1 oder 2, **gekennzeichnet durch** eine in einem der Überströmkanäle (6; 21) ohne Entkopplungskäfig querliegend angeordnete, flatterfähig angebundene oder festgelegte Entkopplungsmembran.

5. Gummilager nach einem der Ansprüche 1, 3 oder 4, **gekennzeichnet durch** einen Bypasskanal (21) mit einem querliegenden Überdruckventil, insbesondere Gummilippenventil (29), zwischen den Kammern (4, 5) zum Freischalten großer Amplituden und Druckfronten im Arbeitsfluid.

6. Gummilager nach Anspruch 5, **gekennzeichnet durch** ein akustisches Entkopplungsglied, das mit dem querliegenden Überdruckventil im Bypasskanal (21) gekoppelt oder mit diesem zu einer Funktionseinheit verbunden ist.

7. Gummilager nach Anspruch 6, **gekennzeichnet durch** ein parallel zur Hülsenlagerachse ausgerichtetes und als querkippbares Lippenventil ausgebildetes Überdruckventil im Bypasskanal (21), das in Ausnehmungen (25) in den Bypasskanalwänden (22, 23, 24) insgesamt als Lose querliegend und flatterfähig leicht querverschiebbar gehaltert und gelagert ist.

8. Verwendung des Gummilagers mit den Merkmalen nach einem oder mehreren der Ansprüche 1 bis 7 als Fahrwerksbuchse im Kraftfahrzeugbau.

## Claims

1. Hydraulically damping sleevelike rubber bearing with different spring characteristics (F1, F2) radially perpendicular to one another, consisting of an inner sleevelike connecting block (1) and of a likewise sleevelike cage (2) surrounding the latter, said block and said cage, lying axially parallel one in the other, are embedded in a rubber spring block (3), in which, in turn, at least two working chambers (4, 5) for the damping fluid, located diametrically opposite one another and communicating with one another via one or more damping throttle ducts (6) and at least one bypass duct (21), are designed in such a way that said working chambers are closed off in a fluid-tight manner, radially relative to the outside, by the cylindrical inner wall (7) of an outer sleeve (8) of the sleeve bearing, into which outer sleeve the rubber spring block (3) reinforced by the cage (2) is pressed, the at least one damping throttle duct (6) and the bypass duct (21) having in each case dynamic characteristic data different from one another and tuned to different frequency and amplitude ranges, **characterized by**, in the throttle-duct (6) or in the bypass duct (21) of the sleeve bearing, an uncoupling member (9; 26) which is tuned to low amplitudes in the acoustic frequency range and which cancels the vibrations of low amplitudes in the acoustic frequency range which occur in the damping fluid between the communicating chambers (4, 5), without damping volume flows or blocking against passing pressure wave fronts of high amplitudes occurring in the duct (6; 21) uncoupled in this way.

2. Rubber bearing according to Claim 1, **characterized by** an uncoupling member (9; 26) oriented axially parallel to the sleeve bearing axis (19).

3. Rubber bearing according to one of Claims 1 or 2, **characterized by** an uncoupling member (9), lying transversely in the throttle duct (6), in the form of an uncoupling cage (10), into which an elastomeric diaphragm (11) is inserted as a loose piece.

4. Rubber bearing according to one of Claims 1 or 2, **characterized by** an uncoupling diaphragm which is arranged transversely in one of the overflow ducts (6; 21) without an uncoupling cage and which is fastened or fixed flutterably.

5. Rubber bearing according to one of Claims 1, 3 or 4, **characterized by** a bypass duct (21) with a transverse pressure relief valve, in particular rubber lip valve (29), between the chambers (4, 5) for clearing high amplitudes and pressure fronts in the working fluid.

6. Rubber bearing according to Claim 5, **characterized by** an acoustic uncoupling member which is coupled to the transverse pressure relief valve in the bypass duct (21) or is connected to said valve to form a functional unit.

7. Rubber bearing according to Claim 6, **characterized by**, in the bypass duct (21), a pressure relief valve which is oriented parallel to the sleeve bearing axis and is designed as a transversely tiltable lip valve (26) and which is held and mounted in recesses (25) in the bypass duct walls (22, 23, 24), lying as a whole transversely therein as a loose piece and capable of being easily displaced transversely in a flutterable manner.

8. Use of the rubber bearing having the features according to one or more of Claims 1 to 7 as a chassis bush in motor vehicle construction.

## Revendications

1. Palier en caoutchouc, en forme de douille, à amortissement hydraulique, ayant des caractéristiques (F1, F2) différentes dans des directions radiales perpendiculaires, formées d'un bloc de raccordement (1) du genre d'une douille, intérieur, et d'une cage (2), également du genre d'une douille, entourant ce bloc de raccordement, les deux étant incorporés l'un dans l'autre, avec des axes parallèles, dans un bloc élastique en caoutchouc (3), dans lequel à leur tour sont réalisées au moins deux chambres de travail (4, 5), diamétralement opposées l'une à l'autre et communiquant entre elles par l'intermédiaire d'un ou plusieurs canaux d'étranglement (6) amortisseurs et d'au moins un canal de dérivation (21), les chambres de travail étant prévues pour le fluide d'amortissement, de manière que celles-ci soient fermées de façon étanche au fluide vers l'extérieur par la paroi intérieure (7) cylindrique d'une douille extérieure (8) du palier à douille, dans laquelle le bloc élastique en caoutchouc (3) renforcé par la cage (2) est introduit sous pression, le au moins un canal d'étranglement (6) amortisseur et le canal de dérivation (21) présentant respectivement des caractéristiques dynamiques, différentes l'une de l'autre et adaptées à des plages de fréquence et d'amplitude différentes, **caractérisé par** un organe de désaccouplement (9; 26) adapté aux petites amplitudes dans la plage de fréquence acoustique, cet organe étant situé dans le canal d'étranglement (6) ou dans le canal de dérivation (21) du palier à douille, avec comme rôle de faire s'évanouir les vibrations se produisant dans le fluide d'amortissement et ayant de petites amplitudes, dans la plage de fréquence acoustique, entre les chambres (4, 5) communiquant, sans que, dans le canal (6; 21) ainsi désaccouplé, se produisent des débits volumes amortisseurs ou bien un blocage contre les fronts d'ondes de pression en mouvement, avec de grandes amplitudes.

2. Palier en caoutchouc selon la revendication 1, **caractérisé par** un organe de désaccouplement (9; 26) orienté parallèlement à l'axe de palier à douille (19).

3. Palier en caoutchouc selon l'une des revendications 1 ou 2, **caractérisé par** un organe de désaccouplement (9), placé transversalement dans le canal d'étranglement (6) et ayant la forme d'une cage de désaccouplement (10), dans laquelle une membrane en élastomère (11) est insérée, sous forme d'élément créant un jeu de fonctionnement.

4. Palier en caoutchouc selon l'une des revendications 1 ou 2, **caractérisé par** une membrane de désaccouplement, raccordée par la matière de façon susceptible de permettre un battement ou bien fixée, disposée transversalement dans l'un des canaux de dérivation (6; 21), sans cage de désaccouplement

5. Palier en caoutchouc selon l'une des revendications 1, 3 ou 4, **caractérisé par** un canal de dérivation (21) ayant une soupape de surpression transversale, en particulier une soupape à lèvre en caoutchouc (29), entre les chambres (4, 5) pour supprimer par sa manoeuvre les phénomènes de grandes amplitudes et de fronts de pression dans le fluide de travail.

6. Palier en caoutchouc selon la revendication 5, **caractérisé par** un organe de désaccouplement acoustique, couplé à la soupape de surpression transversale montée dans le canal de dérivation (21) ou relié à celle-ci en un ensemble fonctionnel.

7. Palier en caoutchouc selon la revendication 6, **caractérisé par** une soupape de surpression orientée parallèlement à l'axe du palier à douille et réalisée sous la forme de soupape à lèvre pouvant subir un basculement transversal, la soupape de surpression étant prévue dans le canal de dérivation (21), maintenue et montée dans des évidements (25) ménagés dans les parois (22, 23, 24) du canal de dérivation, en étant placée transversalement globalement en tant qu'élément lâche ou formateur d'un jeu et susceptible de battre en étant aisément déplaçable transversalement.

8. Utilisation du palier en caoutchouc présentant les caractéristiques selon l'une ou plusieurs des revendications 1 à 7 en tant que coussinet pour train de roulement, dans la construction de véhicules automobiles.
